# EUROPÄISCHE PATENTANMELDUNG

(11) **EP 1 847 748 A2**
(43) Veröffentlichungstag der Anmeldung: **24.10.2007**
(21) Anmeldenummer: 07105959.6
(22) Anmeldetag: 11.04.2007
(51) Int. Cl.: F16L 5/04

(54) **Brandschutzschlauch**

(30) Priorität: 20.04.2006 DE 102006000189
(71) Anmelder: HILTI Aktiengesellschaft, 9494 Schaan (LI)
(72) Erfinder: Paetow, Mario, 86859 Igling (DE); Münzenberger, Herbert, 65191 Wiesbaden (DE); Förg, Christian, 86862 Dillishausen (DE)
(74) Vertreter: Wildi, Roland

(57) **Zusammenfassung**

Die Erfindung betrifft ein Brandschutzschlauch (10) zum Durchführen von Leitungen durch ein Bauteil, das wenigstens teilweise aus einem elastischen, intumeszierenden Material besteht und eine aussen liegende Oberfläche (11) sowie eine innen liegende Oberfläche (12) aufweist, die sich in einer Längsrichtung erstrecken. Wenigstens eine der Oberflächen (11, 12) ist dabei mit einer Profilierung versehen. Die Profilierung ist dabei z. B. durch eine Vielzahl von in Längsrichtung des Brandschutzschlauchs (10) verlaufenden Rippen (13, 14) gebildet.

## Beschreibung

### Brandschutzschlauch

Die Erfindung betrifft einen Brandschutzschlauch, der im Oberbegriff von Patentanspruch 1 genannten Art. Derartige Brandschutzschläuche dienen dem Durchführen von Kabeln oder anderen Leitungen durch Öffnungen in Bauteilen, wie z. B. durch Decken oder Wände, und bestehen zumindest teilweise aus einem intumeszierenden Material.

Aus der EP 1 396 675 A1 ist ein Brandschutzschlauch bekannt, dessen Hauptbestandteil ein thermisch expandierender Graphit, thermisch expandierender Gummi oder ein thermisch expandierendes Harz ist. Der Brandschutzschlauch ist in seiner Längsrichtung geschlitzt, um nachträglich um eine Leitung herumgelegt werden zu können. Die Oberfläche des Brandschutzschlauchs ist glatt.

Von Nachteil bei diesem Brandschutzschlauch ist, dass er im Brandfall auf der dem Wärmeherd abgewandten Seite nur einen geringen Kühleffekt aufweist und dass für eine thermische Isolierung der zu ummantelnden Leitung relativ grosse Materialstärken eingesetzt werden müssen.

Der vorliegenden Erfindung liegt daher die Aufgabe zugrunde, einen Brandschutzschlauch zum Durchführen von Leitungen durch Bauteile bereitzustellen, der die genannten Nachteile vermeidet und gute Isolationseigenschaften aufweist.

Erfindungsgemäss wird die Aufgabe dadurch gelöst, dass wenigstens eine der Oberflächen des Brandschutzschlauchs mit einer Profilierung versehen ist, wodurch die physikalisch aktive Fläche der Oberfläche vergrössert und der Wärmeaustausch mit der Umgebung verbessert ist. Hierdurch kann an der dem Wärmeherd abgewandten Seite ein besserer Kühleffekt erreicht werden. Ferner wird die Reaktionszeit des intumeszierenden Materials des Brandschutzschlauchs durch den verbesserten Wärmeaustausch verringert. Ferner wird durch die Profilierung die Materialstärke (die Dicke des Materials) erhöht und die thermisch isolierenden Eigenschaften verbessert, ohne entsprechend mehr Material einsetzen zu müssen.

Es ist ferner vorteilhaft, wenn die Profilierung als eine Vielzahl von in Längsrichtung des Brandschutzschlauchs verlaufenden Rippen ausgebildet ist die mit dazwischen liegenden Rillen alternieren. Beim Einbau des Brandschutzschlauchs in ein Loch in einem Bauteil, wie z. B. einer Wand, haben die Rippen den Vorteil, dass der Brandschutzschlauch dadurch leichter deformierbar ist und so in Löcher oder Bohrungen einführbar ist, die kleinere Durchmesser aufweisen als der Brandschutzschlauch. Der Toleranzbereich liegt hier bei einer Abweichung des Lochdurchmessers von einigen mm.

Günstig ist es auch, wenn die Rippen in regelmässigen Abständen zueinander angeordnet sind und parallel zueinander verlaufen, so dass eine gleichmässige Verteilung der Rippen an der Oberfläche erzielt wird, so dass die vorteilhaften thermischen und physikalischen Eigenschaften überall am Brandschutzschlauch gleich sind.

Vorteilhaft sind erste Rippen an der aussen liegenden Oberfläche ausgebildet. Hierdurch wird neben den positiven thermische Effekten auch noch die Möglichkeit geschaffen, nebeneinander liegende Brandschutzschläuche miteinander zu verzahnen, indem die Rippen des einen Brandschutzschlauchs jeweils in benachbarte Rillen des anderen Brandschutzschlauchs eingreifen und umgekehrt. Hierdurch lassen sich auf einfache Weise Gruppen oder Cluster von Brandschutzschläuchen bilden, die gemeinsam in grössere Durchbrüche oder Löcher in Bauteilen eingebaut werden können.

Günstig ist es ferner, wenn zweite Rippen an der innen liegenden Oberfläche des Brandschutzschlauchs ausgebildet sind. Hierdurch wird der im Brandfall heisse Metallkern eines durch den Brandschutzschlauch hindurchgeführten Kabels auf Abstand zu der Oberfläche des Brandschutzschlauchs gehalten und ein Zusammensacken des weicher werdenden Materials des Brandschutzschlauchs verhindert. Die Oberfläche bleibt kühler, da der Kontakt zum heissen Kupfernkern verringert ist. Es wird so ein effizienter Isoliereffekt erzeugt.

Vorteilhaft sind die ersten Rippen an der aussen liegenden Oberfläche und die zweiten Rippen an der innen liegenden Oberfläche ausgebildet, wodurch die vorgenannten positiven Eigenschaften kombiniert werden.

Durch eine zahnförmige Ausbildung der Rippen kann die vorbeschriebene Möglichkeit, Brandschutzschläuche zu Gruppen bzw. Clustern zusammenzufassen, noch verbessert werden, da die zahnförmigen Rippen wie die Zähne von Zahnrädern optimal ineinander greifen können.

Weitere Vorteile und Massnahmen der Erfindung ergeben sich aus den Unteransprüchen, der nachfolgenden Beschreibung und den Zeichnungen. In den Zeichnungen ist die Erfindung in einem Ausführungsbeispiel dargestellt.

Es zeigen:
Fig. 1 eine Anordnung mehrer erfindungsgemässer Brandschutzschläuche im Querschnitt,
Fig. 2 ein einzelner Brandschutzschlauch gemäss Fig. 1 in Seitenansicht,
Fig. 3 ein weiterer erfindungsgemässer Brandschutzschlauch im Querschnitt,
Fig. 4 noch ein weiterer erfindungsgemässer Brandschutzschlauch im Querschnitt.

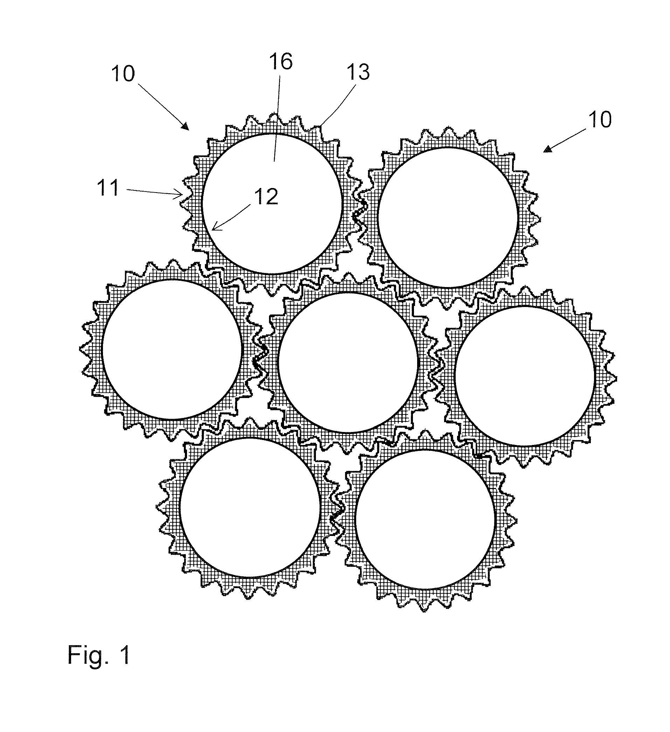

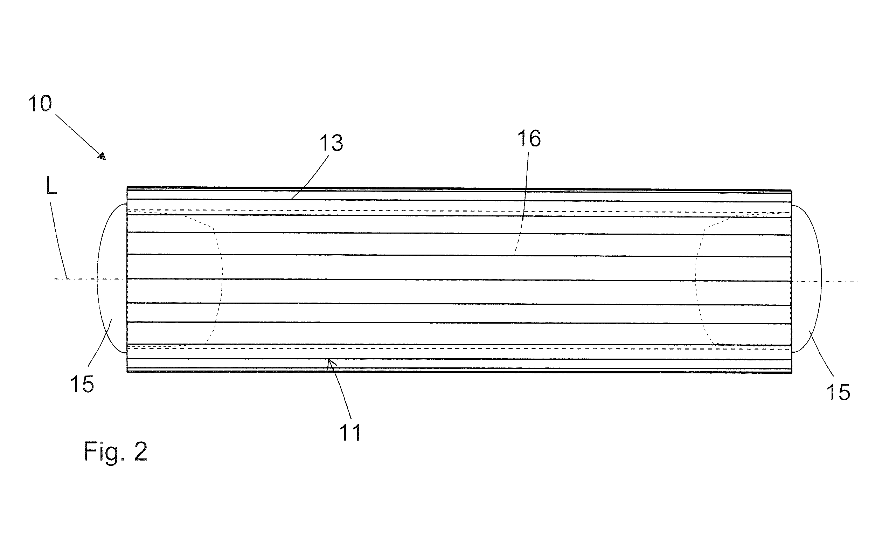

In den Figuren 1 und 2 ist eine erste Ausführungsform eines erfindungsgemässen Brandschutzschlauchs 10 dargestellt. Der Brandschutzschlauch 10 ist als elastischer Körper ausgebildet, der sich in einer Längsrichtung L erstreckt und der aus einem gummielastischen, intumeszierenden Material besteht, wie z. B. einem gummiartigen Polymer mit intumeszierenden Eigenschaften. Als intumeszierende Inhaltsstoffe kommen dabei z. B. Blähgraphit oder ähnliche bekannte intumeszierende Stoffe in Frage.

An einer aussen liegenden Oberfläche 11 des Brandschutzschlauchs 10 ist eine Profilierung in Form von in Längsrichtung L des Brandschutzschlauchs 10 parallel zueinander verlaufenden ersten Rippen 13 ausgebildet, die in diesem Beispiel einen zahnförmigen, dreieckigen Querschnitt aufweisen. Diese ersten Rippen 13 verbessern die thermischen Eigenschaften des Brandschutzschlauchs 10. Sie sind im regelmässigen Abstand an der aussen liegenden Oberfläche 11 verteilt und gewährleisten eine optimale Isolierung der zu umhüllenden Leitung bzw. des zu umgebenden Kabels. Wie aus Fig. 1 ersichtlich ist, erlauben die zahnförmig ausgebildeten ersten Rippen 13 eine Verzahnung von nebeneinander angeordneten Brandschutzschläuchen 10, indem die Rippen 13 des einen Brandschutzschlauchs 10 jeweils in benachbarte Rillen zwischen den Rippen 13 des anderen Brandschutzschlauchs 10 eingreifen und umgekehrt. Hierdurch wird eine kompakte Gruppierung mehrerer Brandschutzschläuche 10 möglich. Eine innen liegende Oberfläche 12 des Brandschutzschlauchs 10 ist dabei unprofiliert. Der Brandschutzschlauch 10 kann einzeln oder in Gruppen in eine Durchführung, wie z. B. einem Bohrloch, eines Bauteils eingebracht und installiert werden.

Die beiden zu einem Innenraum 16 hin offenen Enden des Brandschutzschlauchs 10 sind durch verformbare Stopfen 15 aus einer dauerelastischen Brandschutz-Knetmasse reversibel verschlossen, so dass ein rauchgasdichter Verschluss auch bei unbelegtem Brandschutzschlauch 10 gewährleistet ist. Die Stopfen 15 können dann vor der Durchführung des Kabels oder der Leitung durch den Brandschutzschlauch 10 entfernt werden und sind dann wieder verwendbar, z. B. als Abdichtmasse für einen ggf. vorhandenen Spalt zwischen dem Brandschutzschlauch 10 und der Leitung bzw. dem Kabel.

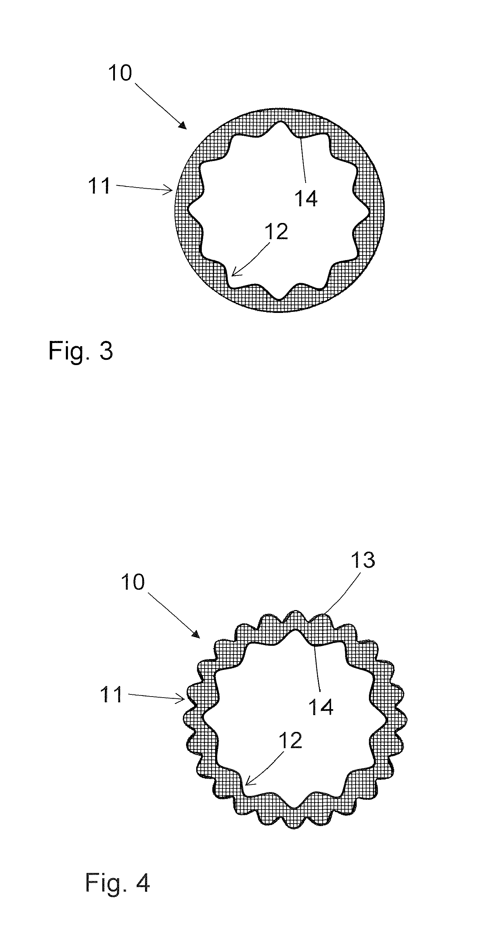

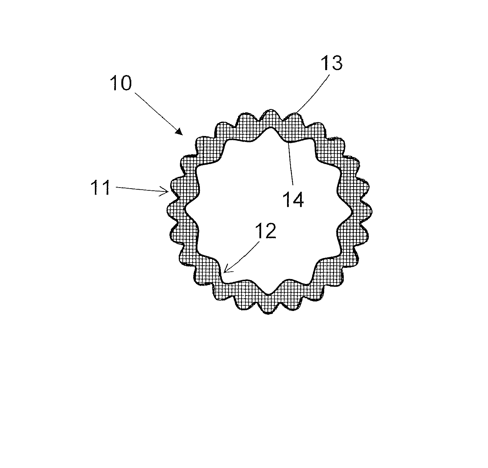

Der in Fig. 3 dargestellte Brandschutzschlauch 10 unterscheidet sich lediglich dadurch von dem vorhergehend beschriebenen, dass nur an der innen liegenden Oberfläche 12 eine Profilierung in Form von zweiten Rippen 14 ausgebildet ist, welche die thermischen Eigenschaften des Brandschutzschlauchs 10 verbessern.

Der in Fig. 4 dargestellte Brandschutzschlauch 10 unterscheidet sich dadurch von den vorhergehend beschriebenen, dass dort sowohl an der innen liegenden Oberfläche 12 eine Profilierung mit zweiten Rippen 14 als auch an der aussen liegenden Oberfläche 11 eine Profilierung mit ersten Rippen 13 ausgebildet ist, welche die thermischen Eigenschaften des Brandschutzschlauchs 10 verbessern. Die ersten und zweiten Rippen 13, 14 weisen dabei eine eher rundliche Aussenkontur auf.

## Patentansprüche

1. Brandschutzschlauch (10) zum Durchführen von Leitungen durch ein Bauteil, das wenigstens teilweise aus einem elastischen, intumeszierenden Material besteht und eine aussen liegende Oberfläche (11) und eine innen liegende Oberfläche (12) aufweist, die sich entlang einer Längsrichtung (L) erstrecken,
**dadurch gekennzeichnet,**
**dass** wenigstens eine der Oberflächen (11, 12) mit einer Profilierung versehen ist.

2. Brandschutzschlauch nach Anspruch 1, **dadurch gekennzeichnet, dass** die Profilierung durch eine Vielzahl von in Längsrichtung (L) verlaufenden Rippen (13, 14) ausgebildet ist.

3. Brandschutzschlauch nach Anspruch 2, **dadurch gekennzeichnet, dass** die Rippen (13, 14) in regelmässigen Abständen zueinander angeordnet sind und parallel zueinander verlaufen.

4. Brandschutzschlauch nach Anspruch 2 oder 3, **dadurch gekennzeichnet, dass** erste Rippen (13) an der aussen liegenden Oberfläche (11) ausgebildet sind.

5. Brandschutzschlauch nach Anspruch 2 oder 3, **dadurch gekennzeichnet, dass** zweite Rippen (14) an der innen liegenden Oberfläche (12) ausgebildet sind.

6. Brandschutzschlauch nach einem der Ansprüche 2 bis 5, **dadurch gekennzeichnet, dass** die erste Rippen (13) an der aussen liegenden Oberfläche (11) und zweite Rippen (14) an der innen liegenden Oberfläche (12) ausgebildet sind.

7. Brandschutzschlauch nach einem der Ansprüche 2 bis 6, **gekennzeichnet durch** eine zahnförmige Ausbildung der Rippen (13, 14).
